(19) Europäisches Patentamt
European Patent Office
Office européen des brevets

(11) **EP 2 856 867 A1**

(12) **EUROPEAN PATENT APPLICATION**
published in accordance with Art. 153(4) EPC

(43) Date of publication:
08.04.2015 Bulletin 2015/15

(21) Application number: 13797804.5

(22) Date of filing: 23.05.2013

(51) Int Cl.:
*A01K 63/04* (2006.01)    *A01K 63/02* (2006.01)
*B01D 53/14* (2006.01)    *B01D 53/28* (2006.01)
*B01J 20/04* (2006.01)    *B01J 20/10* (2006.01)
*B01J 20/18* (2006.01)    *B65D 81/26* (2006.01)
*B65D 85/50* (2006.01)    *C01B 13/02* (2006.01)

(86) International application number:
PCT/JP2013/064398

(87) International publication number:
WO 2013/180013 (05.12.2013 Gazette 2013/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority:  31.05.2012  JP 2012124941

(71) Applicant: **Mitsubishi Gas Chemical Company, Inc.**
**Tokyo 100-8324 (JP)**

(72) Inventor: **YUYAMA, Megumu**
**Tokyo 101-0062 (JP)**

(74) Representative: **Hoffmann Eitle**
**Patent- und Rechtsanwälte PartmbB**
**Arabellastraße 30**
**81925 München (DE)**

(54) **OXYGEN-GENERATING/CO2-GAS-ABSORBING AGENT COMPOSITION, PACKAGING FOR OXYGEN-GENERATING/CO2-GAS-ABSORBING AGENT, AND TRANSPORTATION METHOD FOR LIVE FISH AND SHELLFISH**

(57)    The present invention provides an oxygen-generating and carbon dioxide-absorbing agent composition having excellent preservation stability. The oxygen-generating and carbon dioxide-absorbing agent composition of the present invention comprises a solid peroxide, a peroxide decomposition catalyst, and an alkali metal carbonate.

EP 2 856 867 A1

## Description

Technical Field

The present invention relates to an oxygen-generating and carbon dioxide-absorbing agent composition and the like. Particularly, the present invention relates to an oxygen-generating and carbon dioxide-absorbing agent composition having excellent preservation stability, and an oxygen-generating and carbon dioxide-absorbing agent packaging body obtained by packaging the composition in a moisture-permeable waterproof material, and a method for transporting live fish and shellfish using the packaging body.

Background Art

For transporting live fish and shellfish such as aquarium fish such as nishikigoi, tropical fish, goldfish, and medaka and edible fish and shellfish such as carp, eel, squid, shrimp, flatfish, and shellfish, a bag made of a plastic film in which water and live fish and shellfish are placed and oxygen is injected is packed in a corrugated cardboard box and carried on a truck or an aircraft in many cases. Such transport using a plastic bag is a simple and low cost method. However, the oxygen in the bag is consumed by the respiration of live fish and shellfish, and carbon dioxide is generated. Then, usually, 24 hours or more of transport is difficult, and fish may die even within 24 hours. Therefore, means for transporting live fish and shellfish alive with good freshness for 48 hours or more has been required. For such a demand, a method for transporting live fish and shellfish using a two-agent type live fish-transporting agent is proposed (Patent Document 1). Patent Document 1 describes the so-called two-agent type live fish-transporting agent using in combination a packaging body in which an oxygen-generating agent is enclosed (housed) in a transport bag and a packaging body in which a carbon dioxide-absorbing agent is enclosed (housed) in a transport bag.

Further, the so-called one-agent type oxygen-generating and carbon dioxide-absorbing agent packaging body in which a solid peroxide and a hydroxide and/or oxide of an alkaline-earth metal having both functions of oxygen generation and carbon dioxide absorption are packaged in one transport bag for simpler use is proposed (Patent Document 2).

Citation List

Patent Document

Patent Document 1: Japanese Patent Application Laid-Open No. 11-206266
Patent Document 2: Japanese Patent Application Laid-Open No. 11-208713

Summary of Invention

Technical Problem

However, the present inventor has studied the above conventional packaging body in detail and found that there is more room for improvement in the preservation stability of the conventional packaging body in an unused state. In other words, the following has been found: the above packaging body can exhibit the effect of keeping live fish alive with good freshness when one immediately after preparation is used. However when the packaging body is stored at normal temperature for a long time, the solid peroxide decomposes to decrease the oxygen generation ability over time, and therefore, there is more room for improvement in the effect of keeping live fish alive with good freshness when the packaging body is used after a long period of storage.

The present inventor has found out that the cause of such a sudden decrease in oxygen generation ability is a hydroxide of an alkali metal or an alkaline-earth metal. The hydroxide of an alkali metal or an alkaline-earth metal serves as a decomposition catalyst for a solid peroxide, and therefore, when they are mixed, the solid peroxide generates oxygen and decomposes. The decomposition rate of the solid peroxide can be slowed by allowing an oxide of an alkali metal or an alkaline-earth metal such as calcium oxide to coexist, but the effect of stopping the decomposition is small. Thus, it has been found that there is more room for improvement in the preservation stability.

The present invention solves the above problem, and it is an object of the present invention to provide an oxygen-generating and carbon dioxide-absorbing agent composition having excellent preservation stability, and an oxygen-generating and carbon dioxide-absorbing agent packaging body, and a method for transporting live fish and shellfish using the packaging body.

Solution to Problem

The present inventor has studied diligently in order to improve the preservation stability of an oxygen-generating and carbon dioxide-absorbing agent packaging body, and as a result found that the use of a carbonate of an alkali metal as a carbon dioxide-absorbing agent is very effective, to complete the present invention.

It has become clear that a carbonate of an alkali metal has a carbon dioxide absorption effect, and also can suppress the decomposition of a solid peroxide compared with a hydroxide of an alkali metal or an alkaline-earth metal, and therefore, it has been possible to adopt a carbonate of an alkali metal as the carbon dioxide absorbent of the present invention.

Specifically, the present invention is as follows.

[1] An oxygen-generating and carbon dioxide-absorbing agent composition comprising a solid peroxide, a peroxide decomposition catalyst, and an alkali metal carbonate.

[2] The oxygen-generating and carbon dioxide-absorbing agent composition according to [1], wherein the solid peroxide comprises sodium percarbonate.

[3] The oxygen-generating and carbon dioxide-absorbing agent composition according to [1] or [2], wherein the peroxide decomposition catalyst comprises one or more catalysts selected from the group consisting of an activated carbon, catalase enzyme, and manganese dioxide.

[4] The oxygen-generating and carbon dioxide-absorbing agent composition according to any one of [1] to [3], wherein the alkali metal carbonate comprises one or more carbonates selected from the group consisting of sodium carbonate anhydride, sodium carbonate monohydrate, and potassium carbonate anhydride.

[5] The oxygen-generating and carbon dioxide-absorbing agent composition according to any one of [1] to [4], comprising 0.1 to 100 parts by mass of the peroxide decomposition catalyst and 0.1 to 500 parts by mass of the alkali metal carbonate based on 100 parts by mass of the solid peroxide.

[6] The oxygen-generating and carbon dioxide-absorbing agent composition according to any one of [1] to [5], comprising 0.1 to 100 parts by mass of a desiccant based on 100 parts by mass of the solid peroxide.

[7] The oxygen-generating and carbon dioxide-absorbing agent composition according to [6], wherein the desiccant comprises one or more desiccants selected from the group consisting of calcium oxide, calcium chloride anhydride, magnesium oxide, zeolite, and silica gel.

[8] An oxygen-generating and carbon dioxide-absorbing agent packaging body comprising the oxygen-generating and carbon dioxide-absorbing agent composition according to any one of [1] to [7] and a packaging material packaging the oxygen-generating and carbon dioxide-absorbing agent composition, at least part of the packaging material comprising a moisture-permeable waterproof material.

[9] The oxygen-generating and carbon dioxide-absorbing agent packaging body according to [8], wherein the moisture-permeable waterproof material comprises a microporous membrane comprising a sheet made of a resin and having micropores, and/or a nonwoven fabric comprising a sheet made of a resin and having micropores.

[10] The oxygen-generating and carbon dioxide-absorbing agent packaging body according to [8] or [9], wherein the moisture-permeable waterproof material has a moisture permeability according to cup method (40°C, 90% RH) of 20 $g/m^2$/24 hours or more and a Gurley air permeability of 0.1 to 3000 seconds/100 mL of air, and is impervious to liquid water at normal pressure.

[11] A method for transporting live fish and shellfish, comprising transporting the live fish and shellfish together with an oxygen-generating and carbon dioxide-absorbing agent packaging body according to any one of claims 8 to 10 in a container, wherein the live fish and shellfish together with the oxygen-generating and carbon dioxide-absorbing agent packaging body are enclosed within the container.

Advantageous Effects of Invention

The present invention can provide an oxygen-generating and carbon dioxide-absorbing agent composition having excellent preservation stability, and an oxygen-generating and carbon dioxide-absorbing agent packaging body, and a method for transporting live fish and shellfish using the packaging body.

Description of Embodiments

A mode for carrying out the present invention (hereinafter simply referred to as "this embodiment") will be described in detail below, but the present invention is not limited to this embodiment described below. Various modifications can be made in the present invention without departing from the spirit thereof.

An oxygen-generating and carbon dioxide-absorbing agent composition (hereinafter also simply referred to as a "composition") in this embodiment contains a solid peroxide, a peroxide decomposition catalyst, and an alkali metal carbonate.

The solid peroxide according to this embodiment is not particularly limited as long as it is a peroxide which is solid at normal pressure and temperature. Examples of the solid peroxide include inorganic peroxides such as sodium percarbonate (sodium carbonate-hydrogen peroxide adduct) obtained by adding sodium carbonate and hydrogen peroxide at a molar ratio of 2:3, sodium perborate tetrahydrate, calcium peroxide, barium peroxide, potassium persulfate, and potassium hydrogen persulfate and organic peroxides. One solid peroxide is used alone, or two or more solid peroxides are used in combination. Among them, inorganic peroxides are preferred, and sodium percarbonate is more preferred, from the viewpoint of better preservation stability and the ease of use.

There are many grades of commercial products of sodium percarbonate which have various stabilities by addition of or coating with various salts or the like, and all of them can be used as the solid peroxide according to this embodiment. In addition, since the amount of oxygen generated or the oxygen generation rate changes depending on the grade used, a suitable commercial product of sodium percarbonate can be selected according to the target amount of oxygen generated and the target duration and the like for different purposes.

The shape of the solid peroxide is not particularly limited. Examples of the shape include a powder (particle) form and a plate form. Molded products of various shapes may be used. Among these, a powder (particle) form is preferred from the viewpoint of more effectively and reliably achieving the action and effect of the present invention.

The peroxide decomposition catalyst for promoting the decomposition of the solid peroxide is not particularly limited. Examples of the peroxide decomposition catalyst include activated carbons, catalase enzyme, and manganese dioxide. Among them, the activated carbon is preferred from the viewpoint of more effectively and reliably exhibiting the function of the catalyst of promoting the decomposition of the solid peroxide. The mass ratio of the solid peroxide to the above catalyst contained in the oxygen-generating and carbon dioxide-absorbing agent composition is different depending on the amount of oxygen generated and the duration. Preferably 0.1 to 100 parts by mass, more preferably 1 to 60 parts by mass, of the above catalyst is contained based on 100 parts by mass of the solid peroxide. When the mass ratio of the above catalyst is 0.1 parts by mass or more, the function of the catalyst of promoting the decomposition of the solid peroxide can be more effectively and reliably exhibited. When the mass ratio of the above catalyst is 100 parts by mass or less, the reaction rate of the solid peroxide can be controlled. One peroxide decomposition catalyst is used alone, or two or more peroxide decomposition catalysts are used in combination.

The shape of the peroxide decomposition catalyst is not particularly limited. Examples of the shape include a solid powder (particle) form, a plate form, and a lump form. Among these, a solid powder (particle) form is preferred from the viewpoint of more effectively and reliably achieving the action and effect of the present invention.

In this embodiment, the alkali metal carbonate used as a carbon dioxide-absorbing agent is not particularly limited. Examples of the alkali metal carbonate include sodium carbonate anhydride, sodium carbonate monohydrate, potassium carbonate anhydride, potassium carbonate 1.5 hydrate, and lithium carbonate anhydride. Among them, sodium carbonate anhydride, sodium carbonate monohydrate, and potassium carbonate anhydride are more preferred, and sodium carbonate anhydride is further preferred, from the viewpoint of even better carbon dioxide absorbency and moreover, lower decomposition activity of the solid peroxide. One alkali metal carbonate is used alone, or two or more alkali metal carbonates are used in combination.

The mass ratio of the solid peroxide to the alkali metal carbonate contained in the oxygen-generating and carbon dioxide-absorbing agent composition in this embodiment is different depending on the target ratio of the amount of oxygen generated to the amount of carbon dioxide absorbed and the target duration. Preferably 0.1 to 500 parts by mass, more preferably 1 to 100 parts by mass, of the alkali metal carbonate is contained based on 100 parts by mass of the solid peroxide. When the mass ratio of the alkali metal carbonate is 0.1 parts by mass or more, the function of the alkali metal carbonate of absorbing carbon dioxide can be more effectively and reliably exhibited. When the mass ratio of the alkali metal carbonate is 500 parts by mass or less, the amount of carbon dioxide absorbed can be controlled.

The shape of the alkali metal carbonate is not particularly limited. Examples of the shape include a solid powder (particle) form and a plate form. Molded products of various shapes may be used. Among these, a solid powder (particle) form is preferred from the viewpoint of more effectively and reliably achieving the action and effect of the present invention.

In the oxygen-generating and carbon dioxide-absorbing agent composition in this embodiment, a hydroxide of an alkali metal or an alkaline-earth metal can be contained as a carbon dioxide-absorbing agent in addition to the alkali metal carbonate to the extent that the preservation stability is not impaired. The content of the hydroxide of an alkali metal or an alkaline-earth metal in the oxygen-generating and carbon dioxide-absorbing agent composition should be appropriately set according to the desired performance and is not particularly limited. The content is, based on 100 parts by mass of the solid peroxide, preferably 0 to 5 parts by mass, more preferably 0 to 3 parts by mass, further preferably 0 to 1 part by mass, and particularly preferably 0 parts by mass, that is, the oxygen-generating and carbon dioxide-absorbing agent composition comprises no hydroxide of an alkali metal or an alkaline-earth metal.

In the oxygen-generating and carbon dioxide-absorbing agent composition in this embodiment, water promotes the oxygen generation reaction. While this oxygen-generating and carbon dioxide-absorbing agent composition is preserved in an unused state, the progress of the oxygen generation reaction can be prevented by suppressing contact with moisture. From such a viewpoint, by incorporating a desiccant in the composition, the oxygen generation reaction in an unused state can be more effectively suppressed. The desiccant is not particularly limited as long as it adsorbs or absorbs moisture. Examples of the desiccant include calcium oxide, calcium chloride anhydride, magnesium oxide, zeolite, and silica gel. One of these may be used alone, or two or more of these may be used in combination.

In a case where the oxygen-generating and carbon dioxide-absorbing agent composition in this embodiment contains a desiccant, for the mass ratio of the solid peroxide to the desiccant contained in the composition, preferably 0.1 to 100 parts by mass, more preferably 1 to 60 parts by mass, of the desiccant is contained based on 100 parts by mass of the solid peroxide. When the mass ratio of the desiccant is 0.1 parts by mass or more, the function of the desiccant can be more effectively and reliably exhibited. When the mass ratio of the desiccant is 100 parts by mass or less, the oxygen generation reaction in an unused state can be suppressed, and the inhibition of oxygen generation during use also can be prevented.

The shape of the desiccant is not particularly limited. Examples of the shape include a solid powder (particle) form and a plate form. Molded products of various shapes may be used. Among these, a solid powder (particle) form is preferred from the viewpoint of more effectively and reliably achieving the action and effect of the desiccant.

From live fish and shellfish, carbon dioxide (carbonic acid gas) is generated by respiration, and nitrogen-containing compounds such as ammonia are further discharged as excrement. Particularly, ammonia decreases the freshness of live fish and shellfish, and therefore, depending on the type of live fish and shellfish and the transport conditions, nitrogen-containing compounds such as ammonia are preferably removed from a system in which live fish and shellfish are present. From this viewpoint, an adsorbent can be contained in the oxygen-generating and carbon dioxide-absorbing agent composition in this embodiment. As the adsorbent, known substances that adsorb nitrogen-containing compounds can be used. Examples of the adsorbent include zeolite. In other words, zeolite can function not only as a desiccant but also as an adsorbent. The shape of the adsorbent is preferably a solid powder (particle) form as in the above materials.

In addition to the above materials, the oxygen-generating and carbon dioxide-absorbing agent composition in this embodiment may contain various additives which can be contained in conventionally known oxygen-generating and carbon dioxide-absorbing agent compositions, as long as they do not inhibit the achievement of the object of the present invention.

An oxygen-generating and carbon dioxide-absorbing agent packaging body (hereinafter also simply referred to as a "packaging body") in this embodiment contains the oxygen-generating and carbon dioxide-absorbing agent composition in this embodiment described above and a packaging material packaging (housing) the composition, at least part of the packaging material comprising a moisture-permeable waterproof material. The packaging body according to this embodiment should be the so-called one-agent type, in which the materials of the oxygen-generating and carbon dioxide-absorbing agent composition coexist in the same packaging body. The shape and form of the packaging material in the packaging body are not particularly limited, and the packaging material may be, for example, in the form of a bag having flexibility or in the shape of a box having no or low flexibility. Therefore, the packaging material may be, for example, a packaging material having a cup shape to the opening of which a film comprising a moisture-permeable waterproof material is bonded for covering.

As the moisture-permeable waterproof material according to this embodiment, a moisture-permeable waterproof material having a cup method moisture permeability (40°C·90% RH: JIS-Z0208: 1976) of 20 g/m$^2$/24 hours or more, preferably 20 to 100000 g/m$^2$/24 hours, and a Gurley air permeability (JIS-P8117: 2009) of 0.1 to 3000 seconds/100 mL of air, preferably 1 to 1000 seconds/100 mL of air, and being impervious to liquid water at normal pressure is preferably illustrated. Such a moisture-permeable waterproof material is preferred because it can more effectively and reliably prevent the passage of liquid water and can more effectively and reliably allow gases such as air and water vapor to pass. It can be checked by the following procedure whether the moisture-permeable waterproof material is "impervious to liquid water at normal pressure" or not: the small bag is fabricated with the moisture-permeable waterproof material, a small amount of liquid water is injected into the small bag, the small bag is sealed so that the gas phase in the small bag is at normal pressure, the small bag is allowed to stand at room temperature for 1 hour and then it is observed whether water drops form on the outside surface of a small bag or not.

When the oxygen-generating and carbon dioxide-absorbing agent packaging body in this embodiment is used, moisture outside the packaging body passes through the packaging material and comes into contact with the composition in this embodiment housed in it, and thus, the oxygen generation reaction proceeds. Since the oxygen generation rate changes depending on the moisture permeability of the packaging material used, the oxygen generation rate can be adjusted by the selection of a suitable packaging material. As materials other than the moisture-permeable waterproof material constituting the packaging material, conventionally known packaging materials can also be adopted, and, for example, moisture-impermeable water-resistant materials typified by multilayer films, molded containers and the like made of resins which are obtained by laminating a polyethylene terephthalate film or a nylon film, and a polyethylene film or a Polypropylene film in combination can be used.

Specific examples of the moisture-permeable waterproof material include, but are not limited to, a microporous membrane comprising a sheet made of a resin having micropores, and a nonwoven fabric comprising a sheet made of a resin having micropores. Known ones can also be used.

The microporous membrane is not particularly limited and may be a known one. Specifically, the microporous membrane can be manufactured, for example, by a method such as the cold stretching of a film made of a synthetic resin illustrated by a polyethylene, polypropylene, or polyethylene fluoride resin or the like; the stretching of a film having a foreign substance; or the stretching of a film having a foreign substance after extracting the foreign substance from the film, or a method such as the electron beam irradiation or laser light irradiation of a film. In addition, examples of commercial products of the microporous membrane include Juragard (trade name manufactured by the US: Celanese), NF Sheet (trade name manufactured by Tokuyama Corporation), Cellpore NW (trade name manufactured by SEKISUI FILM CO., LTD.), and KTF (trade name manufactured by Mitsubishi Plastics, Inc.).

As the nonwoven fabric, for example, various ones obtained by bonding fibers of resins illustrated by polyethylene, polypropylene, polyethylene fluoride, polyesters, nylons, or the like by heat, pressure, an adhesive, or the like can be used. Among these, nonwoven fabrics obtained by bonding long fibers by heat and/or pressure are preferred. Examples of commercial products of the nonwoven fabric include Tyvek (trade name manufactured by the US: DuPont) and the spunbond Eltas (trade name manufactured by Asahi Kasei Corporation).

The microporous membrane and the nonwoven fabric according to this embodiment may be single layers. For the purpose of the improvement of heat sealability, the reinforcement of strength, and the like, they also may be multilayers, or laminations on another material in addition to or instead of a multilayer. The another material is preferably in a sheet form. As the another material for heat sealability improvement, a film composed of a resin having a softening point lower than the softening points of the resins constituting the microporous membrane and the nonwoven fabric, and having openings (hereinafter described as a "perforated sheet") is preferred. Examples of the resin constituting the perforated sheet include polyethylene, polypropylene, ethylene-vinyl acetate copolymers (EVA), and polyethylene ionomers. It is possible to previously heat-adhere the another material (for example, a perforated sheet) to the microporous membrane or the nonwoven fabric, or alternatively it is possible only to separately prepare the another material and the microporous membrane or the nonwoven fabric, laminate them, and then heat-seal the peripheral portion. The nonwoven fabric heat-adhered to the microporous membrane can also of course be used.

As the reinforcing material, one obtained by knitting band-like materials of synthetic fibers comprising polyethylene is preferred, and, for example, one obtained by knitting bands having a width of 10 mm or less in a lattice form and heat-fusing the vertical bands and the horizontal bands is used. Specifically, for example, Warifu (trade name; manufactured by JX Nippon ANCI Corporation) is preferably used. The reinforcing material is preferably heat-adhered between the microporous membrane or the nonwoven fabric and the perforated sheet.

The form and shape and manufacturing method of the packaging body in this embodiment is not particularly limited. For example, the packaging body can be manufactured by sandwiching the composition in this embodiment between two packaging materials in a sheet form and heat-sealing four sides of the packaging materials. In the case of this method, it is preferred that the moisture-permeable waterproof materials constituting at least part of the packaging materials be heat-sealed, or that the moisture-permeable waterproof material and the air-impermeable water-resistant material be heat-sealed.

A method for transporting live fish and shellfish in this embodiment comprises transporting the live fish and shellfish together with the above oxygen-generating and carbon dioxide-absorbing agent packaging body in a container, in which the live fish and shellfish together with the above oxygen-generating and carbon dioxide-absorbing agent packaging body are enclosed within. A method for storing live fish and shellfish in this embodiment comprises storing the live fish and shellfish together with the above oxygen-generating and carbon dioxide-absorbing agent packaging body in a container, in which the live fish and shellfish together with the above oxygen-generating and carbon dioxide-absorbing agent packaging body are enclosed within. When the oxygen-generating and carbon dioxide-absorbing agent packaging body in this embodiment is used for the transport or storage of live fish and shellfish, the system used is preferably a sealed system or an almost sealed system because the generated oxygen gas is easily dissolved in water. For example, a method can be adopted in which live fish and shellfish, water (or seawater), the oxygen-generating and carbon dioxide-absorbing agent packaging body in this embodiment, and oxygen gas as required are placed in a bag container of polyethylene or the like and the opening of the bag container is tied with a rubber band or the like for enclosure. The oxygen-generating and carbon dioxide-absorbing agent packaging body may only be simply housed in the container, but is preferably used by fixing it to the head space portion in the container with an adhesive or the like from the viewpoint of effectively using the oxygen-generating and carbon dioxide-absorbing agent composition for a longer time. The container is not limited to the above bag container and may be, for example, a container made of a plastic, and the size of the container, the number of enclosed live fish and shellfish, the amount of water, and the like are also not particularly limited.

When the composition or the packaging body in this embodiment is preserved, the composition or the packaging body in this embodiment is preferably sealed and preserved in a container comprising a moisture-impermeable or gas barrier water-resistant material or preserved in coexistence with a desiccant, and more preferably sealed and preserved together with a desiccant in a container comprising a moisture-impermeable or gas barrier water-resistant material, in order to maintain the performance for a longer period. Further, it is preferred that the container be degassed and preserved.

The moisture-impermeable or gas barrier water-resistant material is not particularly limited, and, for example, a film made of a resin on which aluminum foil is laminated, and a film made of a resin on which an aluminum- or silica-deposited resin film is laminated are preferred. More specific examples of the moisture-impermeable or gas barrier water-resistant material include a laminated sheet in which a nylon film or a polyester film/aluminum foil/a polyethylene film or a polypropylene film are laminated in order, and a laminated sheet in which an aluminum- or silica-deposited polyester film/a polyethylene film or a polypropylene film are laminated in order.

The above desiccant used when the composition or the packaging body in this embodiment is preserved is not particularly limited. Examples of the above desiccant include calcium oxide, calcium chloride anhydride, magnesium oxide, zeolite, and silica gel. Among these, silica gel is preferred from the viewpoint of high handling safety and a high moisture absorption effect.

According to this embodiment, it is possible to provide an oxygen-generating and carbon dioxide-absorbing agent composition that has excellent preservation stability while keeping the essential function of the oxygen-generating and carbon dioxide-absorbing agent composition of generating oxygen and absorbing carbon dioxide. In this embodiment, the transport of live fish and shellfish with good freshness is possible even if the two types (the so-called two-agent type) of freshness-keeping agents conventionally used are replaced with the so-called one-agent type oxygen-generating and carbon dioxide-absorbing agent packaging body, and thus live fish and shellfish can be transported more simply.

Examples

The present invention will be specifically described below by Examples, but the present invention is not limited to these Examples.

(Method for Measuring Amount of Oxygen Generated and Amount of Carbon Dioxide Absorbed)

One oxygen-generating and carbon dioxide-absorbing agent packaging body, water-containing cotton impregnated with 20 mL of water, 3000 mL of air (oxygen concentration 20.9% by volume), and 2000 mL of carbon dioxide were placed in a gas barrier bag (made of a barrier nylon/polyethylene: size 350 mm x 400 mm) and sealed. The gas barrier bag was stored at a temperature of 25°C to 30°C in the air atmosphere for 48 hours, and then, the oxygen concentration X (% by volume) and the carbon dioxide concentration Y (% by volume) in the gas barrier bag were measured, and the amount of oxygen generated $\alpha$ (mL) and the amount of carbon dioxide absorbed $\beta$ (mL) were obtained by the following formulas.

$$\text{Amount of oxygen generated } \alpha = -(0.125 - X/100 \times (100 - (12.5 + 40.0))/(100 - (X + Y))) \times 5000$$

$$\text{Amount of carbon dioxide absorbed } \beta = (0.40 - Y/100 \times (100 - (12.5 + 40.0))/(100 - (X + Y))) \times 5000$$

(Fabrication of Oxygen-Generating and Carbon dioxide-Absorbing Agent Packaging Body)

(Fabrication Example 1)

5 g of sodium percarbonate (PC-A: trade name manufactured by Nippon Peroxide Co., Ltd.), 0.1 g of the activated carbon (Granulated SHIRASAGI: trade name manufactured by Japan EnviroChemicals, Ltd.), and 4 g of anhydrous sodium carbonate (reagent) were mixed to obtain an oxygen-generating and carbon dioxide-absorbing agent composition A. This composition A was housed in a bag (dimensions: 120 mm x 80 mm) comprising a packaging material comprising a microporous membrane made of a polyolefin having a thickness of 180 $\mu$m (Cellpore: trade name manufactured by SEKISUI FILM CO., LTD.), and the opening of the bag was heat-sealed to enclose the composition A to obtain an oxygen-generating and carbon dioxide-absorbing agent packaging body A.

(Fabrication Example 2)

An oxygen-generating and carbon dioxide-absorbing agent packaging body B was obtained as in Fabrication Example 1 except that 4 g of anhydrous potassium carbonate (reagent) was used instead of 4 g of anhydrous sodium carbonate.

(Fabrication Example 3)

An oxygen-generating and carbon dioxide-absorbing agent packaging body C was obtained as in Fabrication Example 1 except that 4 g of calcium hydroxide (manufactured by Ryoko Lime Industry Co., Ltd.) was used instead of 4 g of anhydrous sodium carbonate.

(Fabrication Example 4)

An oxygen-generating and carbon dioxide-absorbing agent packaging body D was obtained as in Fabrication Example 1 except that 1 g of calcium oxide (particulate, manufactured by Sakamoto Lime Industry Co., Ltd.) as a desiccant was further added to the oxygen-generating and carbon dioxide-absorbing agent composition A.

(Fabrication Example 5)

An oxygen-generating and carbon dioxide-absorbing agent packaging body E was obtained as in Fabrication Example 4 except that 4 g of calcium hydroxide (manufactured by Ryoko Lime Industry Co., Ltd.) was used instead of 4 g of anhydrous sodium carbonate.

The compositions of the fabricated oxygen-generating and carbon dioxide-absorbing agent packaging bodies A to E are shown in Table 1.

[Table 1]

| Packaging body | Solid peroxide | | Peroxide decomposition catalyst | | Alkali metal carbonate or alkaline-earth metal hydroxide | | Desiccant | |
|---|---|---|---|---|---|---|---|---|
| A | Sodium percarbonate | 5 g | Activated carbon | 0.1 g | Anhydrous sodium carbonate | 4 g | - | - |
| B | | | | | Anhydrous potassium carbonate | | | |
| C | | | | | Calcium hydroxide | | | |
| D | | | | | Anhydrous sodium carbonate | | Calcium oxide | 1 g |
| E | | | | | Calcium hydroxide | | | |

(Example 1)

A gas barrier bag (dimensions: 150 mm x 220 mm) obtained by laminating a polyester/aluminum foil/polyethylene in this order was degassed, and the oxygen-generating and carbon dioxide-absorbing agent packaging body A was packaged in the gas barrier bag. The gas barrier bag was stored in a room (in the air atmosphere) at normal temperature for 10 days. The amount of oxygen generated after the storage for 10 days was measured and compared with the amount of oxygen generated immediately after the fabrication. The results are shown in Table 2.

(Example 2 and Comparative Example 1)

The amount of oxygen generated was measured as in Example 1 except that a packaging body shown in Table 2 was used. The results are shown in Table 2.

[Table 2]

| | | Amount of oxygen generated from oxygen-generating and carbon dioxide-absorbing agent packaging body (mL/packaging body) | |
|---|---|---|---|
| Storage period | | 0 days | 10 days |
| Example 1 | Packaging body A | 425 | 413 |
| Example 2 | Packaging body B | 435 | 416 |
| Comparative Example 1 | Packaging body C | 440 | 45 |

In Examples 1 and 2, there was no expansion of the gas barrier bag also after the storage for 10 days, and there was little change in the amount of oxygen generated. On the other hand, in Comparative Example 1, the gas barrier bag expanded during the storage, and the amount of oxygen generated after the storage for 10 days decreased significantly.

(Example 3)

The amount of oxygen generated was measured as in Example 1 except that the storage period was 2 months, 4 months, and 5 months. In addition, the amount of carbon dioxide absorbed was also simultaneously measured. The results are shown in Table 3.

(Example 4 and Comparative Example 2)

The amount of oxygen generated and the amount of carbon dioxide absorbed were measured as in Example 3 except that a packaging body shown in Table 3 was used. The results are shown in Table 3.

[Table 3]

| | | Amount of oxygen generated (mL/packaging body) | | | | Amount of carbon dioxide absorbed (mL/packaging body) | | | |
|---|---|---|---|---|---|---|---|---|---|
| Storage period | | 0 days | 2 months | 4 months | 5 months | 0 days | 2 months | 4 months | 5 months |
| Example 3 | Packaging body A | 425 | 311 | 253 | 207 | 1468 | 1416 | - | - |
| Example 4 | Packaging body D | 433 | 468 | 446 | 450 | 1521 | 1733 | 1764 | 1728 |
| Comparative Example 2 | Packaging body E | 438 | 241 | 76 | 59 | 2000 | 1943 | 1946 | 1952 |

In Example 3 in which no desiccant was added, the amount of oxygen generated decreased gradually by the long period of storage, but in Example 4 (packaging body D) in which a desiccant was added, little change in the amount of oxygen generated was noted for 5 months. In Comparative Example 2 in which an alkaline-earth metal hydroxide was used instead of an alkali metal carbonate, the gas barrier bag expanded during the storage though a desiccant was added, and the amount of oxygen generated after 5 months decreased significantly. In addition, for the amount of carbon dioxide absorbed, Example 3 and Example 4 showed a value equal to or more than that before the storage, for 2 months and 5 months, respectively.

(Example 5)

A mixture of 50 g of sodium percarbonate (PC-A: manufactured by Nippon Peroxide Co., Ltd.), 1 g of the activated carbon (Granulated SHIRASAGI: manufactured by Japan EnviroChemicals, Ltd.), and 50 g of anhydrous sodium carbonate (reagent) was housed in a bag (dimensions: 160 mm x 135 mm) comprising a packaging material comprising a microporous membrane made of a polyolefin having a thickness of 180 μm (Cellpore: trade name manufactured by SEKISUI FILM CO., LTD.), and the opening was heat-sealed for enclosure to obtain an oxygen-generating and carbon dioxide-absorbing agent packaging body F.

A bag made of polyethylene having a thickness of 60 μm was doubled, 70 Japanese goldfishes (about 600 g), 5 L of water, and one oxygen-generating and carbon dioxide-absorbing agent packaging body F were housed in the bag, and about 5 L of oxygen gas was blown into the bag. Then, the opening of the bag was tied with a rubber band for enclosure, and the bag was allowed to stand in a room (in the air atmosphere) at 22°C to 28°C. Also after the bag was allowed to stand for 72 hours, the oxygen concentration and carbon dioxide concentration of the head space gas were maintained at 70% or more and 10% or less, respectively, and all Japanese goldfishes swam around lively and survived.

(Comparative Example 3)

An experiment was performed as in Example 5 except that the packaging body F was not housed. The oxygen concentration and carbon dioxide concentration of the head space gas after the bag was allowed to stand for 72 hours were 20% and 30%, respectively, and no Japanese goldfishes swam around lively, and half were dead.

This application is based on Japanese Patent Application No. 2012-124941 filed on May 31, 2012, the content of which is incorporated herein by reference.

Industrial Applicability

The oxygen-generating and carbon dioxide-absorbing agent composition of the present invention is an oxygen-generating and carbon dioxide-absorbing agent composition that has excellent preservation stability while keeping the essential function of the oxygen-generating and carbon dioxide-absorbing agent composition of generating oxygen and absorbing carbon dioxide. Therefore, the oxygen-generating and carbon dioxide-absorbing agent packaging body of the present invention has applicability in an industrial field in which live fish and shellfish are transported and stored alive with good freshness.

**Claims**

1. An oxygen-generating and carbon dioxide-absorbing agent composition comprising a solid peroxide, a peroxide decomposition catalyst, and an alkali metal carbonate.

2. The oxygen-generating and carbon dioxide-absorbing agent composition according to claim 1, wherein the solid peroxide comprises sodium percarbonate.

3. The oxygen-generating and carbon dioxide-absorbing agent composition according to claim 1 or 2, wherein the peroxide decomposition catalyst comprises one or more catalysts selected from the group consisting of an activated carbon, catalase enzyme, and manganese dioxide.

4. The oxygen-generating and carbon dioxide-absorbing agent composition according to any one of claims 1 to 3, wherein the alkali metal carbonate comprises one or more carbonates selected from the group consisting of sodium carbonate anhydride, sodium carbonate monohydrate, and potassium carbonate anhydride.

5. The oxygen-generating and carbon dioxide-absorbing agent composition according to any one of claims 1 to 4, comprising 0.1 to 100 parts by mass of the peroxide decomposition catalyst and 0.1 to 500 parts by mass of the alkali metal carbonate based on 100 parts by mass of the solid peroxide.

6. The oxygen-generating and carbon dioxide-absorbing agent composition according to any one of claims 1 to 5, comprising 0.1 to 100 parts by mass of a desiccant based on 100 parts by mass of the solid peroxide.

7. The oxygen-generating and carbon dioxide-absorbing agent composition according to claim 6, wherein the desiccant comprises one or more desiccants selected from the group consisting of calcium oxide, calcium chloride anhydride, magnesium oxide, zeolite, and silica gel.

8. An oxygen-generating and carbon dioxide-absorbing agent packaging body comprising the oxygen-generating and carbon dioxide-absorbing agent composition according to any one of claims 1 to 7 and a packaging material packaging the oxygen-generating and carbon dioxide-absorbing agent composition, at least part of the packaging material comprising a moisture-permeable waterproof material.

9. The oxygen-generating and carbon dioxide-absorbing agent packaging body according to claim 8, wherein the moisture-permeable waterproof material comprises a microporous membrane comprising a sheet made of a resin and having micropores, and/or a nonwoven fabric comprising a sheet made of a resin and having micropores.

10. The oxygen-generating and carbon dioxide-absorbing agent packaging body according to claim 8 or 9, wherein the moisture-permeable waterproof material has a moisture permeability according to cup method (40°C, 90% RH) of 20 $g/m^2$/24 hours or more and a Gurley air permeability of 0.1 to 3000 seconds/100 mL of air, and is impervious to liquid water at normal pressure.

11. A method for transporting live fish and shellfish, comprising transporting the live fish and shellfish together with an oxygen-generating and carbon dioxide-absorbing agent packaging body according to any one of claims 8 to 10 in a container, wherein the live fish and shellfish together with the oxygen-generating and carbon dioxide-absorbing agent packaging body are enclosed within the container.

## INTERNATIONAL SEARCH REPORT

| International application No. |
| --- |
| PCT/JP2013/064398 |

A. CLASSIFICATION OF SUBJECT MATTER

*A01K63/04*(2006.01)i, *A01K63/02*(2006.01)i, *B01D53/14*(2006.01)i, *B01D53/28* (2006.01)i, *B01J20/04*(2006.01)i, *B01J20/10*(2006.01)i, *B01J20/18*(2006.01)i, *B65D81/26*(2006.01)i, *B65D85/50*(2006.01)i, *C01B13/02*(2006.01)n

According to International Patent Classification (IPC) or to both national classification and IPC

B. FIELDS SEARCHED

Minimum documentation searched (classification system followed by classification symbols)
A01K63/04, A01K63/02, B01D53/14, B01D53/28, B01J20/04, B01J20/10, B01J20/18, B65D81/26, B65D85/50, C01B13/02

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-41527 A (Mitsubishi Gas Chemical Co., Inc.), 15 February 2000 (15.02.2000), full specification (Family: none) | 1-11 |
| A | JP 11-206266 A (Mitsubishi Gas Chemical Co., Inc.), 03 August 1999 (03.08.1999), full specification<br>& US 6306352 B1       & US 2002/0001548 A1<br>& EP 905086 A2       & EP 1514841 A2<br>& DE 69837586 D       & DE 69837586 T<br>& TW 403720 B         & KR 10-2005-0091682 A<br>& KR 10-2005-0098779 A  & CN 1212829 A<br>& CN 1659957 A | 1-11 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 August, 2013 (09.08.13) | 20 August, 2013 (20.08.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/064398

C (Continuation). DOCUMENTS CONSIDERED TO BE RELEVANT

| Category* | Citation of document, with indication, where appropriate, of the relevant passages | Relevant to claim No. |
|-----------|-------------------------------------------------------------------------------------|----------------------|
| A | JP 11-208713 A  (Mitsubishi Gas Chemical Co., Inc.), 03 August 1999 (03.08.1999), full specification (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11206266 A
- JP 11208713 A
- JP 2012124941 A